# EUROPÄISCHE PATENTANMELDUNG

(11) **EP 1 241 062 A2**
(43) Veröffentlichungstag der Anmeldung: **18.09.2002**
(21) Anmeldenummer: 02001756.2
(22) Anmeldetag: 25.01.2002
(51) Int. Cl.: B60S 5/02, H01M 8/06

(54) **Verteilersystem zur Versorgung von Verbrauchern**

(30) Priorität: 15.03.2001 DE 10112901
(71) Anmelder: DaimlerChrysler AG, 70567 Stuttgart (DE)
(72) Erfinder: Panik, Ferdinand, Prof. Dr., 73733 Esslingen (DE)

(57) **Zusammenfassung**

Die Erfindung betrifft ein Verteilersystem zur Versorgung eines stationären Brennstoffzellensystems (8) mit einem Brennmittel über eine Brennmittelquelle (5a,5b), wobei das stationäre Brennstoffzellensystem (8) einem oder mehreren in einem stationären Quartier (10) angeordneten Gebäuden (6,6a,6b) zugeordnet ist und zur Versorgung des bzw. der Gebäude (6,6a,6b) mit Strom und/oder Wärme dient, und wobei das Verteilersystem im stationären Quartier (10) eine der Brennmittelquelle (5a,5b) zugeordnete Entnahmestation (9) zur Versorgung von mobilen Verbrauchern (1) mit dem Brennmittel oder einem daraus extrahierten Brennstoff aufweist, wobei die mobilen Verbraucher (1) ein mobiles Brennstoffzellensystem (4) und einen Vorratsbehälter (2) aufweisen.

## Beschreibung

Die Erfindung betrifft ein Verteilersystem zur Versorgung von Verbrauchern gemäß dem unabhängigen Anspruch.

Für den breiten Einsatz von Brennstoffzellenfahrzeugen ist eine ausreichende Zugänglichkeit zu der notwendigen Infrastruktur Voraussetzung. Beim Einsatz von methanolbetriebenen
Brennstoffzellenfahrzeugen können Umbaumaßnahmen an Tankstellen notwendig werden, um Methanol anbieten zu können. Bei der Verwendung von wasserstoffbetriebenen
Brennstoffzellenfahrzeugen ist eine ausreichende Wasserstoff-Infrastruktur notwendig, die auch für den privaten Betreiber des Brennstoffzellenfahrzeug, ohne großen Aufwand erreichbar ist.

Die Bereitstellung einer derartigen ausreichenden Infrastruktur zur Versorgung von Brennstoffzellenfahrzeugen ist kostenintensiv und zeitaufwendig. Dies bedeutet jedoch, daß die Erreichbarkeit einer entsprechend ausgerüsteten Tankstelle für Brennstoffzellenfahrzeuge nicht gewährleistet ist. Darüber hinaus müssen in einer Übergangszeit, in der konventionell betriebene Fahrzeuge in großer Stückzahl zu versorgen sind, große Mengen an Vorräten von unterschiedlichsten Treibstoffen an Tankstellen vorgehalten werden. Dadurch wird eine Einführung von brennstoffzellenbetriebenen Fahrzeugen erschwert und verteuert.

Aus der US 6,065,511 A1 ist ein Betankungssystem für Fahrzeuge bekannt, bei dem beispielsweise Nutzfahrzeuge mit einem Tankfahrzeug ähnlich wie Flugzeuge in der Luft von Tankflugzeugen betankt werden können. Dazu werden Fahrzeuge auf einem vorgegebenen Parkierareal abgestellt. Gleichzeitig wird ein Tankfahrzeug für dieses Areal angefordert und eine Bezahlung der Betankung initiiert. Das Fahrzeug kann betankt werden, während der Fahrer das Fahrzeug verlassen hat und anderen Tätigkeiten nachgeht oder sich erholt. Ebenso ist ein Fahrzeugservice möglich. Beim Verlassen des Areals erhält der Fahrer eine Aufstellung der Füllmenge und Kosten der Betankung.

Der Erfindung liegt die Aufgabe zugrunde, ein Verteilersystem zur Versorgung von Verbrauchern anzugeben, welches eine ausreichende Infrastruktur verfügbar macht, ohne daß aufwendige Umbaumaßnahme an Tankstellen vorgenommen werden müssen.

Diese Aufgabe wird bei einem Verteilersystem mit den Merkmalen des Anspruchs 1 gelöst.

Gemäß der Erfindung wird eine Infrastruktur zur Versorgung von Gebäuden mit einem Brennmittel, welches zur Bereitstellung von Strom und/oder Wärme für die Gebäude vorgesehen ist, zur Versorgung von mobilen Verbrauchern genutzt.

Der Vorteil der erfindungsgemäßen Lösung besteht darin, daß aufwendige Umbauten und Investitionen bei vorhandenen Tankstellen erspart werden, da vorhandene stationäre Systeme zur Betankung mobiler Verbraucher verwendet werden können. Gleichzeitig sind die erfindungsgemäßen Betankungsmöglichkeiten so weit verbreitet, daß diese gut erreichbar sind.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:
- Fig.1: eine schematische Ansicht eines bevorzugten Verteilersystems mit einem stationären Brennstoffzellensystem,
- Fig. 2: eine weitere Ausgestaltung des bevorzugten Verteilersystems mit einer stationären Brennstoff-Erzeugungseinheit und
- Fig. 3: eine weitere Ausgestaltung eines bevorzugten Verteilersystems mit Entnahme eines Brennstoffs für mobile Verbraucher.

Die Erfindung ist besonders für Brennstoffzellensysteme geeignet, welche mit Alkoholen, Kohlenwasserstoffen, Ether oder Wasserstoff versorgt werden, sie ist jedoch nicht auf diese Brennmittel eingeschränkt.

Brennstoffzellensysteme sind attraktive und kompakte Energieversorgungssysteme, die auch sehr gut für stationäre Verbraucher geeignet sind. Solche stationären Verbraucher können Großverbraucher wie etwa Kraftwerke sein oder auch Kleinverbraucher wie private Haushalte oder Geschäftsbetriebe, die mit elektrischer Energie aus Brennstoffzellensystemen versorgt werden. Diese benötigen zwangsläufig eine Versorgung, in Form von Vorratstanks für ein geeignetes Betriebsmittel oder eines Leitungsnetzes mit ausreichender Kapazität, welches ein geeignetes Brennmittel zu den stationären Verbrauchern transportiert.

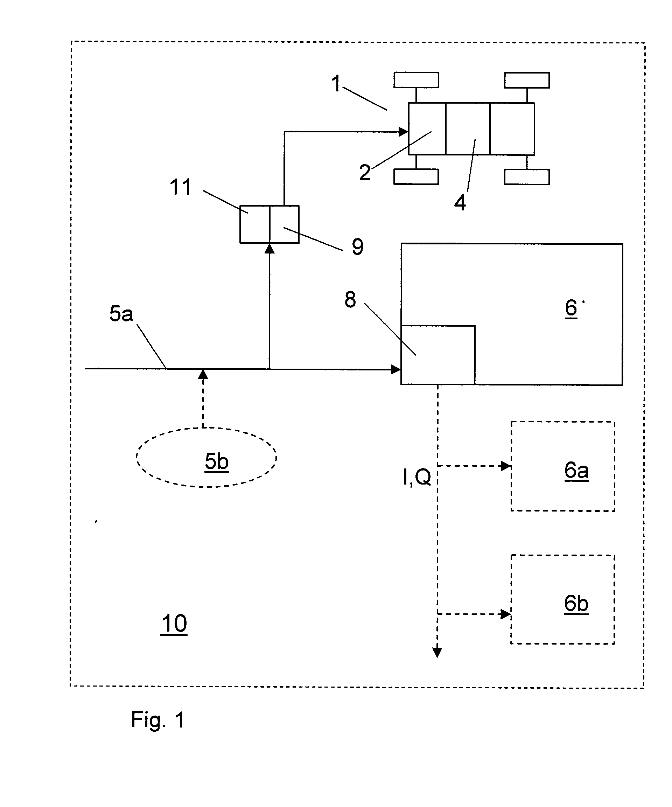

In der Fig. 1 ist eine bevorzugte Ausgestaltung der Erfindung dargestellt. Ein Verteilersystem versorgt ein stationäres Brennstoffzellensystem 8 in einem Gebäude 6 über eine Brennmittelquelle 5a, 5b mit einem Brennmittel. Das stationäre Brennstoffzellensystem 8 ist einem oder mehreren Gebäuden 6, 6x, 6y in einem stationären Quartier 10 zugeordnet und dient zur Versorgung des bzw. der Gebäude 6, 6x, 6y mit Strom I und/oder Wärme Q. Das Verteilersystem im stationären Quartier 10 weist eine der Brennmittelquelle 5a, 5b zugeordnete Entnahmestation 9 zur Versorgung von mobilen Verbrauchern 1 mit dem Brennmittel oder einem daraus extrahierten Brennstoff auf, wobei die mobilen Verbraucher 1 ein mobiles
Brennstoffzellensystem 4 und einen Vorratsbehälter 2 aufweisen.

Das Quartier 10 kann z.B. ein begrenztes Wohnquartier, ein Industriegebiet oder ein gemischtes Wohn- und Gewerbegebiet sein.

Die Brennmittelquelle 5a, 5b ist dem Gebäude 6, 6a, 6b zugeordnet und kann z.B. ein Speichertank 5b sein, in dem ein Brennmittel gespeichert ist, oder eine Medienleitung 5a, mit der ein Brennmittel zum stationären Verbraucher 6 hingeleitet wird.

Der Brennmittelquelle 5a, 5b können weitere Mittel 11 zugeordnet sein, mit denen die Entnahme von Brennmittel und/oder Brennstoff vorzugsweise für mobile Verbraucher 1 und/oder auch für stationäre Verbraucher 6 registriert und eine Form der Bezahlung vorgenommen oder eingeleitet werden kann. So können die Mittel 11 einen Kartenleser umfassen, der Kreditkarten oder Kundenkarten zur Betankung oder auch Bargeld einlesen kann, so daß die entnommene Brennmittelmenge verrechnet werden kann. Vorzugsweise sind die Registrierund/oder Bezahlmittel 11 mit der Entnahmeeinheit 9 verbunden.

Besonders günstig ist, wenn das Verteilersystem ein Brennmittel liefert, welches direkt als Brennstoff von den Brennstoffzellensystemen 4, 8 verwendet werden kann, z.B. Wasserstoff für Brennstoffzellen mit ionenleitenden Polymermembranen oder z.B. Erdgas für Hochtemperaturbrennstoffzellen oder andere Wasserstoffträger wie Benzin, Alkohol, Ether und dergleichen.

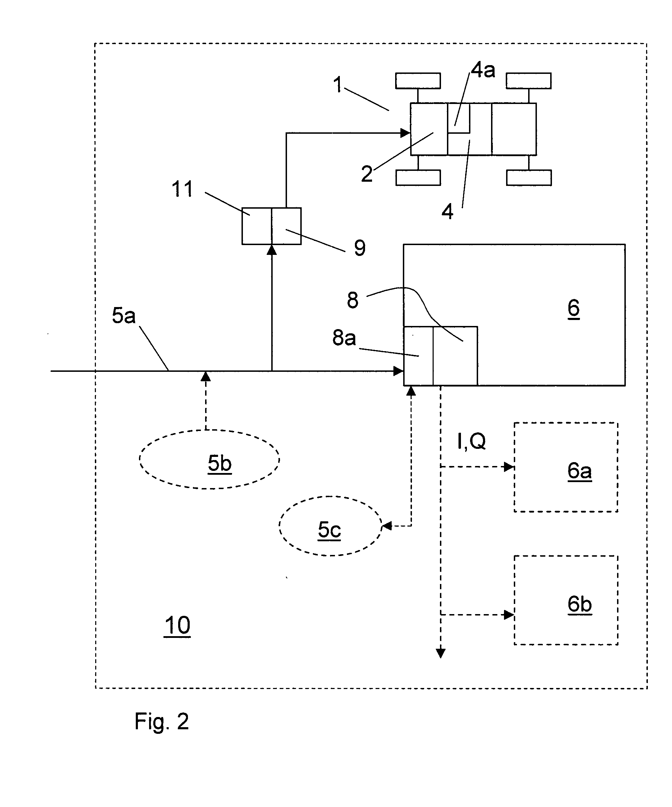

In Fig. 2 ist eine bevorzugte Ausgestaltung der Erfindung dargestellt. Gleiche Komponenten sind mit gleichen Bezugszeichen wie in Fig. 1 bezeichnet. Das stationäre Brennstoffzellensystem 8 weist eine Brennstofferzeugungseinheit 8a zur Extraktion eines Brennstoffes aus dem Brennmittel auf. Vorzugsweise ist die Brennstofferzeugungseinheit 8a eine Reformierungsanlage oder eine Einrichtung zur partiellen Oxidation des Brennmittels.

Der mobilen Verbraucher 1 kann eine mobile Brennstofferzeugungseinrichtung 4a aufweisen und so an Bord einen Brennstoff zur Versorgung der Brennstoffzelleneinheit des mobilen Brennstoffzellensystems 4 aus dem Brennmittel extrahieren, der aus der Brennmittelquelle 5a, 5b in den mobilen Vorratsbehälter 2 getankt wird.

Der stationären Brennstofferzeugungseinheit 8a kann ein stationärer Brennstofftank 5c zugeordnet sein, der stationär gewonnenen Brennstoff zwischenspeichern kann. Dieser zwischengespeicherte Brennstoff kann auch zur Versorgung mobiler Verbraucher 1 eingesetzt werden.

Diese Anordnung ist vorteilhaft, wenn das Brennmittel, welches über das Verteilersystem angeliefert wird, nicht unmittelbar zur Versorgung der mobilen und/oder stationären Brennstoffzellensysteme 4, 8 verwendet werden kann und erst der Brennstoff daraus extrahiert werden muß. So wird Wasserstoff etwa aus Methanol oder einem anderen Betriebsmittel zuerst durch Reformierung oder partielle Oxidation von Methanol gewonnen, bevor eine Brennstoffzelle mit ionenleitender Membran mit Wasserstoff betrieben werden kann. Der stationäre Zwischenspeicher 5c kann dazu verwendet werden, solche mobile Verbraucher 1 mit Wasserstoff zu betanken, die keine mobile Brennstofferzeugungsvorrichtung mitführen.

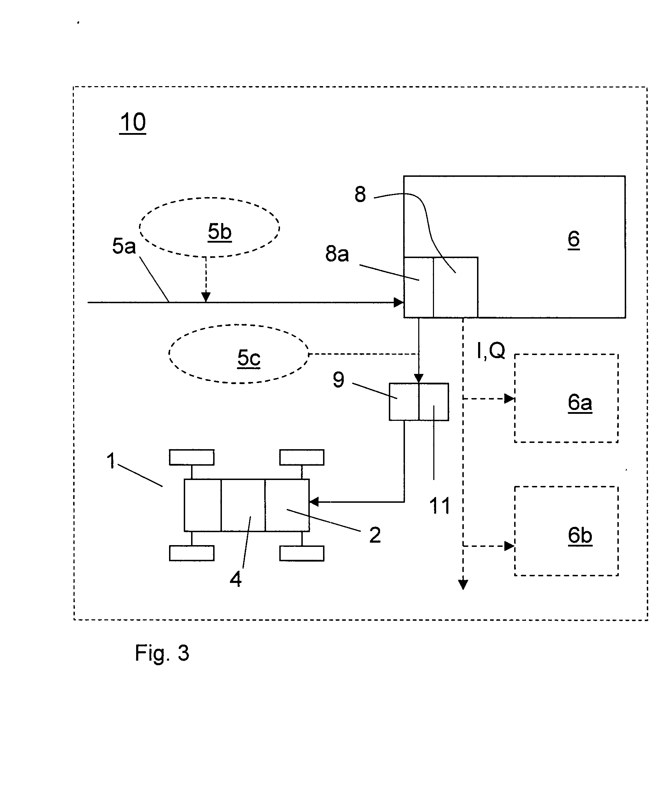

Gemäß der bevorzugten weiteren Ausgestaltung nach Fig. 3 ist in einem Gebäude 6, 6a, 6b des stationären Quartiers 10 ein stationäres Brennstoffzellensystem 8 mit einer stationären Brennstofferzeugungseinrichtung 8a angeordnet. Gleiche Elemente sind mit gleichen Bezugszeichen wie in Fig. 1 und Fig. 2 bezeichnet. Die Entnahmeeinheit 9 ist mit der Brennstofferzeugungseinheit 8a verbunden, so daß der mobile Verbraucher 1 direkt den extrahierten Brennstoff in seinen Vorratsbehälter 2 füllen kann. Auch hier kann ein stationärer Brennstoffspeicher 5c zur Zwischenspeicherung des stationär extrahierten Brennstoffs vorgesehen sein, der zur Versorgung von stationären und/oder mobilen Brennstoffzellensystemen 4, 8 verwendet werden kann.

Eine zentrale, stationäre Brennstofferzeugungseinheit 8a ist dann besonders vorteilhaft, wenn sogenannte PEM-Brennstoffzellensysteme verwendet werden, welche bei niederen Betriebstemperaturen um 100°C betrieben werden und die möglichst reinen Wasserstoff als Brennstoff benötigen. PEM-Brennstoffzellensysteme sind besonders für die Verwendung in Fahrzeugen günstig. Für andere Systeme, die bei höheren Temperaturen arbeiten können, kann eine Brennstoffzelle auch mit dem Brennmittel direkt betrieben werden. So kann eine Hochtemperaturbrennstoffzelle auch direkt mittels Erdgas versorgt werden.

Die Anordnung gemäß Fig. 3 ist vorteilhaft, wenn der mobile Verbraucher 1 keine eigene Brennstofferzeugungsvorrichtung 4a in seinem mobilen Brennstoffzellensystem 4 mit sich führt.

Mobile Verbraucher 1 können Fahrzeuge sein oder andere Verbraucher, die Brennstoffzellenenergie nutzen, etwa Gebrauchselektronik wie Computer und dergleichen.

Erdgas ist als Brennmittel besonders günstig zu verwenden. Erdgas wird üblicherweise über Fernleitungen 5a zu stationären Verbrauchern 6 geleitet und/oder steht in Städten und Gemeinden in Form von größeren Speichertanks 5b zur Verfügung. Erfindungsgemäß kann vor Ort Erdgas für die Versorgung mobiler Verbraucher 1 einer zentralen Gebäudeversorgung z.B. an einem mit Erdgasleitung versorgten Wohnhaus 6 oder am Speichertank der Gemeinde entnommen werden. Daher kann vorteilhaft ein gut ausgebautes Verteilersystem für Erdgas für die mobile Brennstoffzellen-Infrastruktur genutzt werden.

Selbstverständlich können auch Verteilersysteme für andere geeignete Medien, wie etwa Benzin, Erdöl, Ether oder Alkohole, im erfindungsgemäßen Sinn genutzt werden. Damit ist es möglich, über ein vorhandenes Leitungsnetz zur Energieversorgung die dezentrale Versorgung von Brennstoffzellenfahrzeugen sichergestellt werden, ohne daß eine komplett neue Infrastruktur aufgebaut werden muß.

So kann beispielsweise ein Privathaushalt in einem Gebäude 6, der an eine Erdgasleitung 5a angeschlossen ist, um dessen stationäres Brennstoffzellensystem 8 mit Erdgas zu versorgen, ohne weiteres Brennmittel liefern, um ein eigenes Brennstoffzellenfahrzeug 1 zu betanken oder auch die Nachbarschaft im Quartier 10 mit Brennmittel für deren Brennstoffzellenfahrzeuge oder andere Verbraucher 1 versorgen, oder kann als öffentliche Tankstelle fungieren.

Dadurch wird eine zuverlässige Infrastruktur zur dezentralen Versorgung von mobilen Verbrauchern 1 mit Brennmittel verfügbar gemacht, ohne daß eine aufwendige Umrüstung von konventionellen Benzin- oder Diesel-Tankstellen vorgenommen werden muß.

Die erfindungsgemäße Lösung könnte die bisherige Tankstellen-Infrastruktur ergänzen oder ersetzen.

## Patentansprüche

1. Verteilersystem zur Versorgung eines stationären Brennstoffzellensystems (8) mit einem Brennmittel über eine Brennmittelquelle (5a, 5b), wobei das stationäre Brennstoffzellensystem (8) einem oder mehreren in einem stationären Quartier (10) angeordneten Gebäuden (6, 6a, 6b) zugeordnet ist und zur Versorgung des bzw. der Gebäude (6, 6a, 6b) mit Strom und/oder Wärme dient, und wobei das Verteilersystem im stationären Quartier (10) eine der Brennmittelquelle (5a, 5b) zugeordnete Entnahmestation (9) zur Versorgung von mobilen Verbrauchern (1) mit dem Brennmittel oder einem daraus extrahierten Brennstoff aufweist, wobei die mobilen Verbraucher (1) ein mobiles Brennstoffzellensystem (4) und einen Vorratsbehälter (2) aufweisen.

2. Verteilersystem nach Anspruch 1,
**dadurch gekennzeichnet,**
**daß** die Brennmittelquelle (5a, 5b) ein dem Gebäude (6, 6a, 6b) zugeordnetes Leitungsnetz (5a) und/oder ein Speichertank (5b) ist.

3. Verteilersystem nach Anspruch 1,
**dadurch gekennzeichnet,**
**daß** das stationäre Brennstoffzellensystem (8) eine Brennstofferzeugungseinheit (8a) zur Extraktion eines Brennstoffes aus dem Brennmittel (3) aufweist.

4. System nach Anspruch 3,
**dadurch gekennzeichnet,**
**daß** die Entnahmestation (9) mit der Brennstofferzeugungseinheit (8a) verbunden ist.

5. System nach Anspruch 3 oder 4,
**dadurch gekennzeichnet,**
**daß** der Brennstofferzeugungseinheit (8a) ein Brennstofftank (5c) zugeordnet ist.

6. System nach Anspruch 1,
**dadurch gekennzeichnet,**
**daß** der Entnahmestation (9) Mittel (11) zugeordnet sind, um für Brennmittel (3) und/oder Brennstoff für die mobilen Verbraucher (1) eine Registrierung und/oder Bezahlung einzuleiten oder vorzunehmen.

7. System nach Anspruch 1,
**dadurch gekennzeichnet,**
**daß** in einem Gebäude (6, 6a, 6b) des stationären Quartiers (10) ein stationäres Brennstoffzellensystem (8) angeordnet ist, welches zur Versorgung mehrerer Gebäude (6, 6a, 6b) des stationären Quartiers (10) mit Strom und/oder Wärme dient.
